# EUROPÄISCHE PATENTSCHRIFT

(11) **EP 1 377 883 B1**
(45) Veröffentlichungstag und Bekanntmachung des Hinweises auf die Patenterteilung: **16.05.2007**
(21) Anmeldenummer: 02726227.8
(22) Anmeldetag: 28.03.2002
(51) Int. Cl.: G03H 1/08

(54) **VERFAHREN ZUM HERSTELLEN VON INDIVIDUALISIERTEN HOLOGRAMMEN**
METHOD FOR PRODUCING INDIVIDUALIZED HOLOGRAMS
PRODEDE POUR REALISER DES HOLOGRAMMES INDIVIDUALISES

(30) Priorität: 12.04.2001 DE 10118590; 02.08.2001 DE 10137860
(43) Veröffentlichungstag der Anmeldung: 07.01.2004
(73) Patentinhaber: tesa scribos GmbH, 69126 Heidelberg (DE)
(72) Erfinder: NOEHTE, Steffen, 69469 Weinheim (DE); DIETRICH, Christoph, 69126 Heidelberg (DE); THOMANN, Robert, 69121 Heidelberg (DE); BORGSMÜLLER, Stefan, 69115 Heidelberg (DE); STADLER, Stefan, 22359 Hamburg (DE)
(74) Vertreter: Rox, Thomas
(86) Internationale Anmeldenummer: PCT/EP2002/003497
(87) Internationale Veröffentlichungsnummer: WO 2002/084411

(56) Entgegenhaltungen:
- US-A- 5 428 479
- US-A- 5 729 365

## Beschreibung

Die Erfindung betrifft die Nutzung von digitalen Hologrammen als individuelles Merkmal und somit ein Verfahren und eine Vorrichtung (Schreibgerät) zur Herstellung der individuellen digitalen Hologramme.

Digitale Hologramme sind zweidimensionale Hologramme, die aus einzelnen Punkten mit unterschiedlichen optischen Eigenschaften bestehen und aus denen bei Beleuchtung mit einer kohärenten elektromagnetischen Welle, insbesondere Lichtwelle durch Beugung in Transmission oder Reflexion Bilder und/oder Daten reproduziert werden. Die unterschiedlichen optischen Eigenschaften der einzelnen Punkte können Reflexionseigenschaften beispielsweise durch Oberf lächentopographie,_variierende optische Weglängen im Material des Speichermediums (Brechungsindizes) oder Farbwerte des Materials sein.

Die optischen Eigenschaften der einzelnen Punkte werden von einem Computer berechnet, es handelt sich somit um sogenannte computergenerierte Hologramme (CGH). Mit Hilfe des fokussierten Schreibstrahls werden während des Schreibens des Hologramms die einzelnen Punkte des Hologramms in das Material eingeschrieben, wobei der Fokus im Bereich der Oberfläche oder im Material des Speichermediums liegt. Eine Fokussierung bewirkt im Bereich des Fokus eine geringe Einwirkungsfläche auf das Material des Speichermediums, so daß eine Vielzahl von Punkten des Hologramms auf einer kleinen Fläche geschrieben werden kann. Die optische Eigenschaft des jeweils geschriebenen Punktes hängt dabei von der Intensität des Schreibstrahls ab. Dazu wird der Schreibstrahl in zwei Dimensionen mit variierender Intensität über die Oberfläche des Speichermediums gescannt. Die Modulation der Intensität des Schreibstrahls erfolgt dabei entweder über eine interne Modulation der Lichtquelle, beispielsweise eine Laserdiode, oder über eine externe Modulation eines Schreibstrahls außerhalb der Lichtquelle, beispielsweise mit Hilfe von optoelektronischen Elementen. Darüber hinaus kann die Lichtquelle als gepulster Laser ausgebildet sein, dessen Pulslängen steuerbar sind, so dass über die Pulslängen eine Steuerung der Intensität des Schreibstrahls erfolgen kann.

Durch das Abscannnen des intensitätsmodulierten Schreibstrahls entsteht somit eine Fläche mit einer unregelmäßigen Punkteverteilung, das digitale Hologramm. Dieses kann zum Kennzeichnen und Individualisieren beliebiger Gegenstände eingesetzt werden.

Scannende lithographische Systeme sind an sich weit verbreitet. Beispielsweise werden scannende optische Systeme in herkömmliche Laserdrucker eingebaut. Diese Systeme können jedoch zur Herstellung von Hologrammen nicht eingesetzt werden, da sich die Anforderungen für diesen Anwendungszweck gegenüber denen bei Laserdruckern deutlich unterscheiden. Die Auflösung liegt bei guten Drucksystemen bei etwa 2500 dpi, während bei der Herstellung von Hologrammen eine Auflösung von etwa 25.000 dpi erforderlich ist. Außerdem werden bei der digitalen Holographie nur vergleichsweise kleine Flächen beschrieben. Diese sind beispielsweise 1 bis 5 mm² groß, wobei auch andere Größen möglich sind. Die Genauigkeit des Schreibrasters muß bei einem Lithographen zur Herstellung digitaler Hologramme von beispielsweise 1000 x 1000 Punkten auf einer Fläche von 1 x 1 mm² etwa ± 0,1 mm in beide orthogonale Richtungen betragen. Darüber hinaus sollte die Schreibgeschwindigkeit etwa 1 Mpixel/s betragen, damit jeweils ein Hologramm in einer Zeit von ca. 1s geschrieben werden kann. Die vorgenannten Größen sind beispielhaft und stellen keine Beschränkung der Erfindung dar.

Digitale Hologramme können mittels konventioneller Scanmethoden hergestellt werden, bei denen mit stehender Optik der Winkel des einfallenden Strahles variiert wird. Auf diesem Prinzip arbeiten beispielsweise Scanspiegellithographen mit Galvo- und/oder Polygonscannern.

Ein Problem bei den zuvor beschriebenen Hologrammen besteht darin, dass diese gefälscht werden. Daher gibt es bereits seit langem den Wunsch, daß es möglich ist, aus dem geschriebenen Hologramm auf den Lithographen zurück zu schließen, der das Hologramm geschrieben hat. Bisher gibt es dafür jedoch keine befriedigende Lösung.

Aus der US 5 729 365 A ist ein mikrolithographisches Kennzeichen zum Kennzeichnen von sicherheitsrelevanten Medien, wie beispielsweise Kreditkarten, bekannt, das insbesondere als mikroskopisches computergeneriertes Hologramm ausgebildet sein kann. Um das zu kennzeichnende Medium gegen Fälschungen zu schützen, können die bei dem bekannten Kennzeichen erzeugten optischen Strukturen und das Kennzeichen selbst mikroskopisch klein sein. Auf diese Weise sollen sowohl die lithographische Erzeugung der Strukturen als auch das Auslesen der Strukturen für potenzielle Fälscher erheblich erschwert werden. Insbesondere können die Strukturen nur mit im fernen UV-Bereich arbeitenden Lithographen geschrieben werden, und die Ausbildung der Strukturen kann nur mit aufwändigen Rasterkraftmikroskopen ermittelt werden. Allerdings kann auch mit dem bekannten Kennzeichen nicht eindeutig aus dem geschriebenen Hologramm auf den zum Schreiben des Hologramms eingesetzten Lithographen zurück geschlossen werden.

Der Erfindung liegt nun das technische Problem zugrunde, ein Verfahren und eine Vorrichtung anzugeben, bei denen von den Hologrammen auf das zugehörige Schreibgerät zurückgeschlossen werden kann.

Das zuvor aufgezeigte technische Problem wird erfindungsgemäß durch ein Verfahren nach Anspruch 1 gelöst, bei dem gezielt von einem vorgegebenen Raster eines zu schreibenden digitalen computergenerierten Hologramms abweichende Punkte geschrieben werden, aus denen das mindestens eine individualisierende Merkmal beim Reproduzieren des Hologramms abgeleitet werden kann.

Das Lösungsprinzip basiert auf der Verwendung einer Vorrichtung zur Steuerung des Belichtungsvorgangs. Diese Vorrichtung erlaubt das genaue Positionieren der einzelnen durch den Lithographen zu schreibenden Punkte innerhalb eines vorgegebenen Rasters. Diese genaue Steuerung kann aber auch dazu verwendet werden, von dem vorgegebenen Raster abzuweichen, um gezielt vom Raster abweichend positionierte Punkte des digitalen computergenerierten Hologramms zu schreiben.

Eine geeignete Vorrichtung kann eine sogenannte Triggermatrix aufweisen, bei der ein Abtaststrahl, der in Abhängigkeit vom Schreibstrahl bewegt wird, einen lichtempfindlichen Detektor abscannt. Trifft der Abtaststrahl einen der Pixel der Triggermatrix, so wird ein Triggersignal erzeugt, mit dem der Schreibstrahl gesteuert wird, um an der mit dem getroffenen Pixel der Triggermatrix übereinstimmenden Position im Speichermedium einen Punkt des Hologramms zu schreiben. Der Abtaststrahl wird entweder separat zum Schreibstrahl erzeugt und über die gleichen Ablenkeinrichtungen (Scanspiegel) gelenkt wie der Schreibstrahl, oder der Abtaststrahl wird als Teil des Schreibstrahls abgetrennt und ist somit automatisch in seiner Bewegung mit dem Schreibstrahl korreliert.

Es wird hervorgehoben, dass anstelle einer derartigen Triggermatrix eine andersartige Strahlführung und zeitliche Triggerung eingesetzt werden kann. Es kommt nur darauf an, dass der Schreibstrahl sehr genau positioniert werden kann.

Genauso, wie es möglich ist, die zu belichtenden Punkte in einem orthogonalen Raster exakt, also beispielsweise mit einer Genauigkeit von 0,1 µm, zu positionieren, ist es auch möglich von diesem Raster in vordefinierter Weise abzuweichen.

Die Abweichungen vom Raster können dabei in unterschiedlicher Weise vorgenommen werden, wobei die unterschiedlichen Abweichungen verschiedene Konsequenzen haben. Es gibt Abweichungen, die man nur mikroskopisch wahrnehmen kann, d. h. durch Inspektion der einzelnen Punkte mittels eines Mikroskops. Auf der anderen Seite gibt es Abweichungen, die man auch durch holographisches Auslesen makroskopisch erkennen kann. Beide Möglichkeiten können genutzt werden, die Originalität des geschriebenen Hologramms festzustellen, also insbesondere Rückschlüsse auf das Schreibgerät zuzulassen.

Mit anderen Worten kann das Lösungsprinzip auch einfach als zusätzliches Sicherheitsmerkmal aufgefasst werden, das sich mikroskopisch lesen und/oder makroskopisch holographisch auslesen läßt.

Es ist dabei insbesondere möglich, die vom Raster abweichenden Punkte systematisch von ihren vom Raster vorgegebenen Normallagen abweichend einzuschreiben. Dabei können die systematischen Abweichungen von der Normallage in mindestens einer Richtung erzeugt werden. Es ist auch denkbar, dass die systematischen Abweichungen von der Normallage periodisch erzeugt werden. Dabei kann die Periode der Abweichungen insbesondere größer als der Gitterabstand des Rasters gewählt werden.

Es ist ebenso möglich, die vom Raster abweichenden Punkte unsystematisch vom Raster abweichend einzuschreiben.

Das oben aufgezeigte technische Problem wird auch durch ein Verfahren zum Auslesen eines individualisierten digitalen computergenerierten Hologramms gelöst, bei dem das in einem Speichermedium eingeschriebene Hologramm mit einem Strahl elektromagnetischer Strahlung beleuchtet wird, wobei das Hologramm Basisinformationen und mindestens ein individualisierendes Merkmal aufweist, bei dem das durch das Hologramm erzeugte Bild von Aufnahmemitteln aufgenommen und mit Hilfe einer Bilderkennung ausgewertet wird und bei dem das mindestens eine im Hologramm enthaltene individualisierte Merkmal überprüft wird.

In diesem Zusammenhang wird auch ein Speichermedium mit einem digitalen computergenerierten Hologramm beschrieben, dass einzelne im Material des Speichermediums eingeschriebenen Punkten aufweist, die in einem vorgegebenen geometrischen Raster angeordnet sind und das Hologramm bilden. Weiterhin ist eine Vielzahl von einzelnen Punkten vorgesehen, die abweichend vom vorgegebenen Raster im Material des Speichermediums eingeschrieben sind.

Im folgenden wird die Erfindung anhand von Ausführungsbeispielen zunächst anhand eines geeigneten Lithographen und anschließend anhand von Ausschnitten von digitalen Hologrammen näher erläutert. In der beigefügten Zeichnung zeigen
- Fig. 1: ein Ausführungsbeispiel eines Lithographen zum Herstellen von Hologrammen,
- Fig. 2: eine erste Punkteverteilung eines digitalen Hologramms mit Abweichungen der Punkteverteilung von der Gitteranordnung,
- Fig. 3: das aus dem in Fig. 2 dargestellten Hologramm reproduzierte Bild mit sogenannten Geisterbildern,
- Fig. 4: eine zweite Punkteverteilung eines digitalen Hologramms mit Abweichungen der Punkteverteilung von der Gitteranordnung,
- Fig. 5: das aus dem in Fig. 4 dargestellten Hologramm reproduzierte Bild mit sogenannten Geisterbildern.

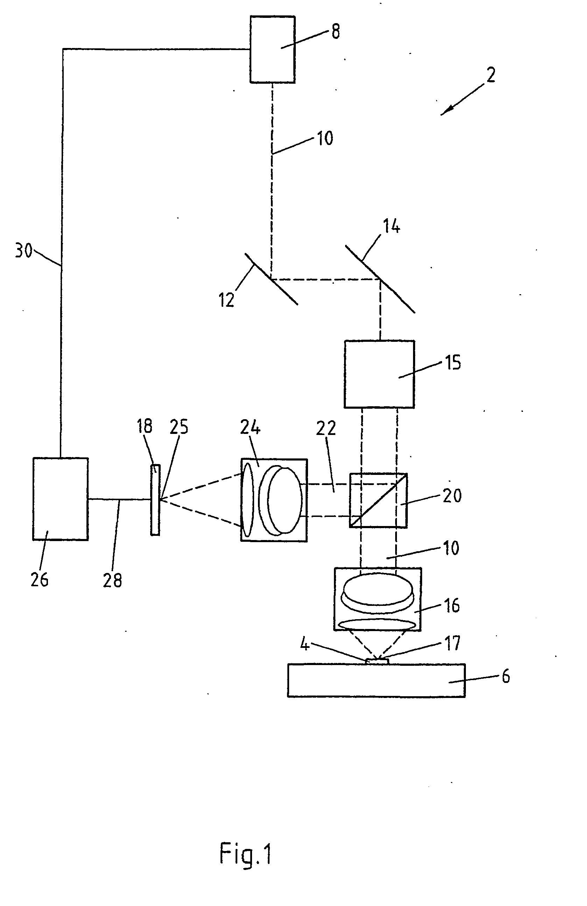

Fig. 1 zeigt einen Lithographen 2 zum Herstellen digitaler Hologramme in einem Speichermedium 4, das auf einem Träger 6 angeordnet ist. Eine Lichtquelle 8 zum Erzeugen eines Schreibstrahls 10 weist bevorzugt einen Laser oder eine Laserdiode auf, so daß der Schreibstrahl 10 als Laserstrahl ausgebildet ist.

Der Lithograph 2 weist weiterhin Antriebsmittel zum zweidimensionalen Bewegen des Schreibstrahls 10 relativ zum Speichermedium 4 auf, die als galvanisch angetriebene Scanspiegel 12 und 14 ausgebildet sind und in zwei im wesentlichen orthogonal zueinander ausgerichtete x- und y-Richtungen den Schreibstrahl ablenken. Die x-Richtung verläuft beispielsweise in der Bildebene der Fig. 1 und die y-Richtung verläuft in einer Ebene senkrecht zur Bildebene. Die Spiegel 12 und 14 stellen also eine x/y-Scanspiegelanordnung dar. Anstelle eines der beiden oder beider galvanischen Scanspiegel können auch drehbare Polygonspiegel eingesetzt werden.

Optional ist weiterhin ein Strahlaufweiter bzw. Kollimator 15 im Strahlengang hinter den Scanspiegeln 12 und 14 angeordnet, um einen aufgeweiteten Schreibstrahl 10 zu erzeugen.

Ein erstes Objektiv 16 fokussiert den Schreibstrahl 10 auf das zu beschreibende Speichermedium 4, so daß im Fokus 17 in Abhängigkeit von der gebündelten Intensität des Schreibstrahls 10 die optische Eigenschaft des Speichermediums 4 verändert wird oder unverändert bleibt.

Eine zweidimensionale Triggermatrix 18 ist vorgesehen, auf die ein durch einen Strahlteiler 20 aus dem Schreibstrahl 10 ausgekoppelter Abtaststrahl 22 mit einem zweiten Objektiv 24 in einem Fokus 25 fokussiert wird.

Beide Objektive 16 und 24 weisen jeweils drei Linsen eines fokussierenden Linsensystems auf. Jedoch kommt es auf die genaue Ausgestaltung der Objektive 16 und 24 nicht an. Die Objektive 16 und 24 gewährleisten jedoch, dass deren Winkelablenkungen in x-/y-Richtung, vorzugsweise linear, voneinander abhängen, da ansonsten keine Kopplung zwischen den Bewegungen der Foki 17 und 25 besteht.

Wie sich aus dem Aufbau des Lithographen 2 gemäß Fig. 1 ergibt, bewegen die Antriebsmittel, also die Scanspiegel 12 und 14 nicht nur den Schreibstrahl_10, sondern auch den Abtaststrahl 22. Denn der Strahlteiler 20 ist im Strahlengang des Schreibstrahls 10 hinter den Scanspiegeln 12 und 14 angeordnet. Somit bewegt sich der Abtaststrahl 22 in gleicher Weise zweidimensional wie der Schreibstrahl 10, so daß der Abtaststrahl 22 relativ zur Oberfläche der Triggermatrix 18 bewegt wird. Daraus ergibt sich, dass die Bewegung des Abtaststrahls 22 mit der Bewegung des Schreibstrahls 10 gekoppelt ist.

Weiterhin sind Steuermittel 26 über eine Leitung 28 mit der Triggermatrix 18 verbunden, um ein Triggersignal zum Steuern der Intensität des Schreibstrahls 10 über eine Leitung 30 auf die Lichtquelle 8 zu übertragen. Die Steuermittel 26 können dabei als schneller Speicherchip oder als Computer ausgebildet sein. Durch das über die Leitung 30 übermittelte Signal wird der Schreibstrahl 10 in Abhängigkeit von der Position des Fokus 25 des Abtaststrahls 22 auf der Triggermatrix 18, die mit der Position des Fokus 17 des Schreibstrahls 10 auf dem Speichermedium 4 gekoppelt ist, moduliert.

Mit anderen Worten wird der Schreibstrahl 10 für ein Schreiben von Hologrammpunkten mit zwei oder mehr verschiedenen Intensitätswerten eingestellt. Bei einem binären Schreiben wird die Intensität zwischen zwei verschiedenen Werten hin- und hergeschaltet, je nach dem, ob ein Punkt geschrieben werden soll oder nicht. Ebenso ist ein Schreiben von Hologrammpunkten mit einer Grauwertabstufung möglich und sinnvoll. Für die Erfassung des Fokus 25 auf der Triggermatrix 18 ist es allerdings erforderlich, dass der niedrigere oder niedrigste Intensitätswert des Schreibstrahls 10 nicht gleich Null ist, da der Abtaststrahl 22 als Teil des Schreibstrahls 10 ausgekoppelt wird.

Weiterhin wird bei dem in Fig. 1 dargestellten Aufbau des Lithographen 2 ein längenbezogenes Übersetzungsverhältnis zwischen der Bewegung des Schreibstrahls 10 auf dem Speichermedium 4 des Abtaststrahls 22 auf der Triggermatrix 18 vorgegeben. Dieses wird durch unterschiedliche Brennweiten der beiden Objektive 14 und 26 realisiert. Ist beispielsweise die Brennweite des ersten Objektives 16 um einen Faktor 10 kleiner als die Brennweite des zweiten Objektivs 24, so ist die Bewegung des Fokus 25 des Abtaststrahls 22 auf der Triggermatrix 18 um den gleichen Faktor 10 mal größer als die Bewegung des Fokus 17 auf der Oberfläche des Speichermediums 4. In der Fig. 1 ist aus Platzgründen lediglich ein Brennweitenverhältnis von ca. 2 dargestellt. Dieses verdeutlich aber, dass es nicht auf ein bestimmtes Verhältnis bei der vorliegenden Ausgestaltung der Erfindung ankommt.

Neben dem zuvor beispielhaft beschriebenen Lithographen sind auch andere Arten von Lithographen einsetzbar, die ein genaues Steuern des Schreibstrahls innerhalb eines vorgegebenen Musters ermöglichen. Dabei ist insbesondere die Anwendung der Triggermatrix nicht zwingend erforderlich, da es auch andere Ausgestaltungen gibt, bei denen die Strahlführung vollzogen wird. Diese können beispielsweise eine Strahlführungsmaske verbunden mit einem zeitlichen Triggersignal aufweisen.

Generell sind bei der vorliegenden Erfindung zwei Abweichungen von der Standard-Triggermatrix, also beispielsweise einem orthogonalen Muster der Punkte des digitalen Hologramms zu unterscheiden.

Die erste Art der Abweichung von der Standard-Matrix betrifft übergreifende Abweichungen von der Gitterordnung. Ist z. B. in mindestens einer der beiden Raumrichtungen der immer exakt gleiche Abstand der Gitterpunkte durch einen systematisch variierenden Abstand ersetzt, läßt sich dies im Beugungsbild makroskopisch nachweisen.

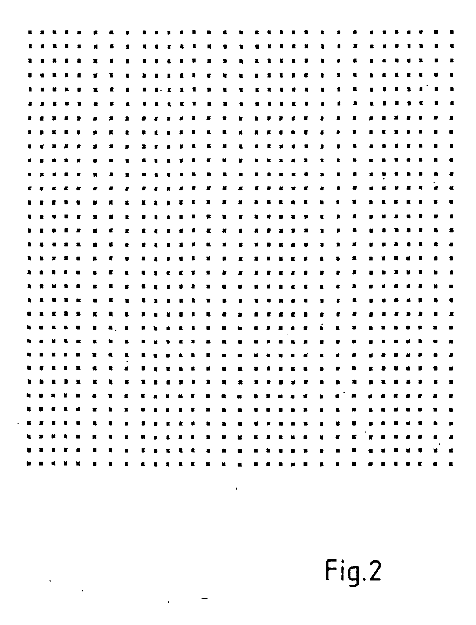

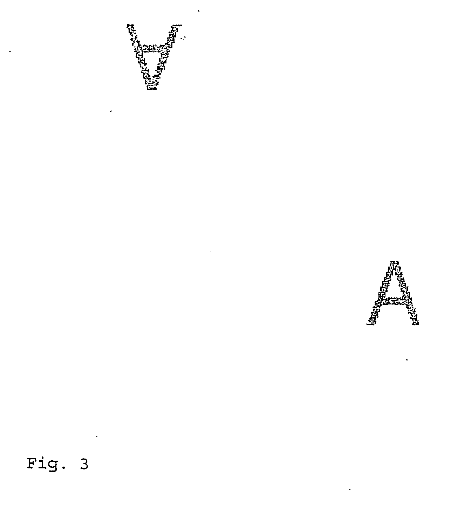

Ein erstes Beispiel dafür ist in Fig. 2 dargestellt, bei dem die Punkte einer jeden vertikalen Zeile sinusförmig mit einer Periode von mehreren Gitterpunkte von ihrer Normallage in horizontaler Richtung abweichen. Somit lassen sich in der Rekonstruktion Schatten des eigentlichen Bildes, also sogenannte Geisterbilder, feststellen, die horizontal versetzt im durch das Hologramm erzeugten Bild erscheinen. Dieses ist in Fig. 3 dargestellt.

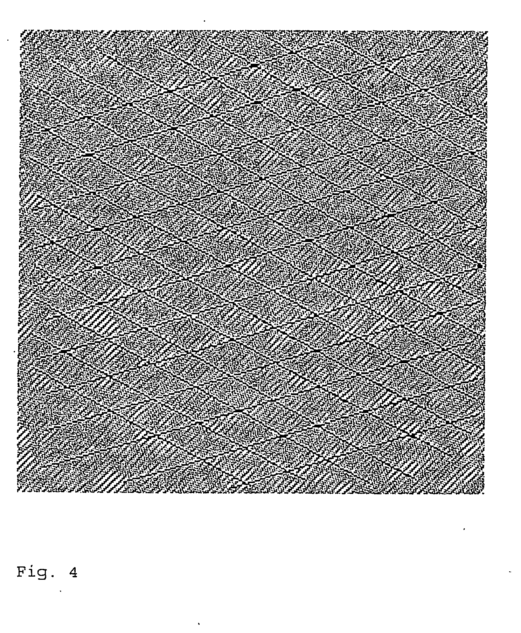

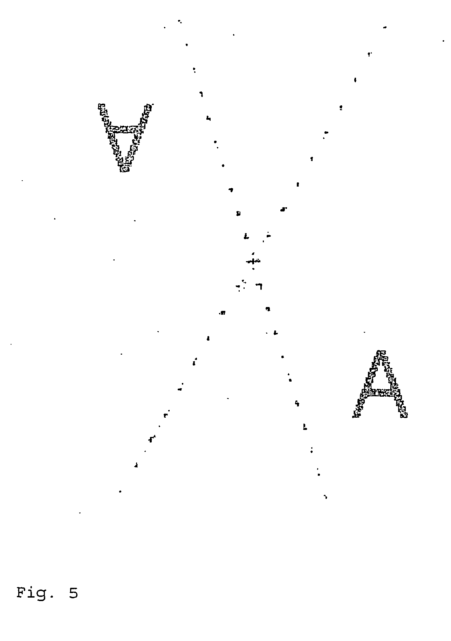

In Fig. 4 ist eine weitere Art der Abweichung von der Standard-Matrix dargestellt. Hier sind innerhalb der Punktmatrix regelmäßig in zwei verschiedene Richtungen verlaufende Linien eingefügt, die im in Fig. 5 dargestellten reproduzierten Bild zu einer entsprechenden geometrischen Form führen. Anhand dieser reproduzierten Muster kann die Echtheit des Hologramms überprüft werden.

Die Punkte der Linien sind entweder abweichend vom vorgegebenen Raster zusätzlich in das Hologramm eingefügt oder durch Intensitätsveränderungen hervorgerufen. Im in Fig. 3 dargestellten Ausführungsbeispiel sind die Punkte der Linien mit voller Intensität schwarz dargestellt.

Bei einem weiteren Ausführungsbeispiel der ersten Art der Abweichungen von der Standard-Matrix wird das orthogonale Raster durch ein hexagonales Raster ersetzt. Dadurch entstehen charakteristische Beugungsstrukturen in sechs Richtungen.

Die Abweichungen von der Standard-Matrix können aber auch anders erfolgen, als in den Fig. 2 und 4 dargestellt ist. So können sowohl in vertikaler als auch in horizontaler Richtung periodische Abweichungen von der Normallage erzeugt werden. Ebenso können die Punkte entlang einer horizontalen Linie bzw. Zeile sinusförmig nach oben und unten relativ zur Normallage ausgelenkt sein. Auch diese Art der Variierung kann in beide Richtungen erfolgen. Auch die Art der geometrischen Muster, die der Punktmatrix des Hologramms hinzugefügt werden, kann beliebig gewählt werden. Generell gilt also, dass die Abweichungen von der Standard-Matrix in verschiedenen Arten möglich ist, sofern sie systematisch erfolgen, um ein im reproduzierten Hologramm auftretendes Kennzeichen hervorzurufen.

Für ein Auswerten'können die charakteristischen Abweichungen durch spezielle Detektoren in den Lesegeräten abgefragt werden, so dass damit zusätzlich die Echtheit der Hologramme geprüft werden kann. Da diese Strukturen makroskopisch beim Auslesen beobachtet werden können, besteht natürlich die Gefahr, daß diese leichter entdeckt werden und nach einer entsprechenden Analyse auch gefälscht werden können.

Dies ist bei der Lösung der zweiten Art der Abweichungen von der Standard-Matrix deutlich schwerer zu erreichen. Denn hier werden nur einzelne Gitterpunkte ohne übergeordneten Zusammenhang variiert. Dies macht sich zwar übergeordnet auch durch eine leichte Anhebung des Rauschpegels im reproduzierten Hologramm bemerkbar, ist jedoch nicht spezifisch aus dem reproduzierten Hologramm zurückzuführen.

Die Variation einzelner Gitterpunkte kann entweder durch eine Verschiebung oder durch ein Weglassen und/oder Hinzufügen einzelner Punkte erreicht werden. Natürlich ist darauf zu achten, daß die Anzahl der veränderten Punkte nicht Überhand nimmt, sonst wird die Rekonstruktion des Hologramms zu sehr beeinträchtigt. Das Weglassen und/oder Hinzufügen einzelner Punkte hat ein entscheidenden Vorteil, da ein typisches binäres Hologramm auch wie eine zufällig belegtes Gitter aussieht, läßt sich für den Fälscher das gewollte und das holographische Weglassen einzelner Punkte nicht unterscheiden.

Die Inspektion der Hologramme muß im Fall der zweiten Art der Abweichung von der Standard-Matrix mikroskopisch vor sich gehen. Man benötigt dabei sowohl die Daten der Triggermatrix als auch die Daten des eingeschriebenen Hologramms, um endgültig feststellen zu können, ob das Hologramm auf einer anderen, also möglicherweise fälschenden Maschine geschrieben wurde. Sind nur die Daten der Triggermatrix bekannt, so lässt sich eine Aussage mit eindeutiger Sicherheit zwar nicht machen, jedoch kann das mikroskopisch betrachtete Bild mit der Triggermatrix korreliert werden. Hier sollte sich bei der korrekten Matrix zumindest ein recht hoher Korrelationspeak ergeben. Die Korrelation wird dabei beispielsweise durch eine räumliche Faltung berechnet.

## Patentansprüche

1. Verfahren zum Herstellen eines individualisierten digitalen computergenerierten Hologramms,
- bei dem das Hologramm als Matrix einzelner Punkte in ein Speichermedium (4) eingeschrieben wird,
- wobei zunächst ein geometrisches Raster für das Einschreiben der holographischen Informationen vorgegeben wird, dem ein individualisierendes Merkmal in Form einer Vielzahl von einzelnen Punkten abweichend vom vorgegebenen Raster überlagert wird.

2. Verfahren nach Anspruch 1,
bei dem die vom Raster abweichenden Punkte systematisch von ihren vom Raster vorgegebenen Normallagen abweichend eingeschrieben werden.

3. Verfahren nach Anspruch 2,
bei dem die systematischen Abweichungen von der Normallage in mindestens einer Richtung erzeugt werden.

4. Verfahren nach Anspruch 2 oder 3,
bei dem die systematischen Abweichungen von der Normallage periodisch erzeugt werden.

5. Verfahren nach Anspruch 4,
bei dem die Periode der Abweichungen größer als der Gitterabstand des Raster gewählt wird.

6. Verfahren nach Anspruch 2,
bei dem zusätzlich zu den im vorgegebenen Raster einzuschreibenden Punkten an vom Raster abweichenden Stellen Punkte in Form eines geometrischen Musters eingeschrieben werden.

7. Verfahren nach Anspruch 2
bei dem als Raster ein orthogonales Raster gewählt wird und bei dem die einzelnen Punkte des individualieserenden Merkmals zumindest teilweise in einem hexagonalen Raster eingeschrieben werden.

8. Verfahren nach Anspruch 1,
bei dem die vom Raster abweichenden Punkte unsystematisch vom Raster abweichend eingeschrieben werden.

9. Verfahren nach Anspruch 8,
bei dem die Abweichungen durch Weglassen und/oder Hinzufügen einzelner Punkte erzeugt werden.

10. Verfahren nach Anspruch 8,
bei dem die Abweichungen durch Verschieben einzelner Punkte von ihren vom Raster vorgegebenen Normallagen erzeugt werden.

11. Verfahren zum Auslesen eines individualisierten digitalen computergenerierten Hologramms, das nach einem Verfahren gemäß einem der Ansprüche 1 bis 10 hergestellt ist,
- bei dem das in einem Speichermedium eingeschriebene Hologramm mit einem Strahl elektromagnetischer Strahlung beleuchtet wird, wobei das Hologramm Basisinformationen und mindestens ein individualisierendes Merkmal aufweist,
- bei dem das durch das Hologramm erzeugte Bild von Aufnahmemitteln aufgenommen und mit Hilfe einer Bilderkennung ausgewertet wird und
- bei dem das mindestens eine im Hologramm enthaltene individualisierte Merkmal überprüft wird.

## Claims

1. A method of producing an individualized digital computer-generated hologram,
- in which the hologram is written in a storage medium as a matrix of individual points,
- in which a geometric pattern for writing the holographic information in is predefined and
- in which an individualizing feature is superimposed on the hologram by writing in a large number of individual points deviating from the predefined pattern.

2. The method as claimed in claim 1,
in which the points deviating from the pattern are written in deviating systematically from their normal positions predefined by the pattern.

3. The method as claimed claim 2,
in which the systematic deviations from a normal position are produced in at least one direction.

4. The method as claimed in claim 2 or 3,
in which the systematic deviations from the normal position are produced periodically.

5. The method as claimed in claim 4,
in which the period of the deviations is chosen to be greater than the grid spacing of the pattern.

6. The method as claimed in claim 2,
in which, in addition to the points to be written in the predefined pattern, points in the form of a geometric pattern are written in at locations deviating from the pattern.

7. The method as claimed in claim 2,
in which an orthogonal pattern is chosen as the pattern, and in which the individual points of the hologram are at least partly written in a hexagonal pattern.

8. The method as claimed in claim 1,
in which the points deviating from the pattern are written in deviating non-systematically from the pattern.

9. The method as claimed in claim 8,
in which the deviations are produced by omitting and/or inserting individual points.

10. The method as claimed in claim 8,
in which the deviations are produced by displacing individual points from their normal positions predefined by the pattern.

11. A method of reading an individualized digital computer-generated hologram, which has been produced with a method according to one of claims 1 to 10,
- in which the hologram written in a storage medium is illuminated with a beam of electromagnetic radiation, the hologram having basic information and at least one individualizing feature,
- in which the image produced by the hologram is recorded by recording means and evaluated with the aid of image recognition, and
- in which the at least one individualizing feature contained in the hologram is checked.

## Revendications

1. Procédé permettant de réaliser un hologramme numérique individualisé, généré par ordinateur,
- dans lequel l'hologramme est introduit dans un support d'enregistrement (4) sous forme de matrice constituée de points individuels,
- dans lequel une trame géométrique est prédéfinie pour l'introduction des informations holographiques et une caractéristique d'individualisation est superposée à l'hologramme sous la forme d'une pluralité de points individuels déviant de la trame prédéfinie.

2. Procédé selon la revendication 1, dans lequel les points déviant de la trame sont introduits en déviant de manière systématique de leurs positions normales prédéfinies par la trame.

3. Procédé selon la revendication 2, dans lequel les déviations systématiques de la position normale sont produites dans au moins une direction.

4. Procédé selon la revendication 2 ou 3, dans lequel les déviations systématiques de la position normale sont produites périodiquement.

5. Procédé selon la revendication 4, dans lequel la période des déviations est choisie pour être plus grande que le maillage de la trame.

6. Procédé selon la revendication 2, dans lequel outre les points à introduire dans la trame prédéfinie, des points sont introduits sous la forme d'un motif géométrique à des endroits déviant de la trame.

7. Procédé selon la revendication 2, dans lequel une trame orthogonale est choisie comme trame et dans lequel les points individuels de la caractéristique d'individualisation sont introduits en partie dans une trame hexagonale.

8. Procédé selon la revendication 1, dans lequel des points sont introduits en déviant de manière non systématique de la trame.

9. Procédé selon la revendication 8, dans lequel les déviations sont produites en omettant et / ou en ajoutant des points individuels.

10. Procédé selon la revendication 8, dans lequel les déviations sont produites en déplaçant des points individuels de leurs positions normales prédéfinies par la trame.

11. Procédé pour lire un hologramme numérique individualisé, généré par ordinateur, qui est réalisé suivant un procédé selon une des revendications 1 à 10,
- dans lequel l'hologramme introduit dans le support d'enregistrement est illuminé par un faisceau de rayonnement électromagnétique, l'hologramme présentant des informations de base et au moins une caractéristique d'individualisation,
- dans lequel l'image générée par l'hologramme est enregistrée par des moyens d'enregistrement et est évaluée à l'aide d'une reconnaissance d'image, et
- dans lequel ladite au moins une caractéristique individualisée contenue dans l'hologramme est vérifiée.
